(19) Europäisches Patentamt
European Patent Office
Office européen des brevets

(11) **EP 4 711 919 A1**

(12) **EUROPEAN PATENT APPLICATION**
published in accordance with Art. 153(4) EPC

(43) Date of publication:
**18.03.2026 Bulletin 2026/12**

(21) Application number: **24818384.0**

(22) Date of filing: **18.04.2024**

(51) International Patent Classification (IPC):
**G06F 9/30** (2018.01)

(52) Cooperative Patent Classification (CPC):
**G06F 9/30; G06F 17/14; G06F 17/16**

(86) International application number:
**PCT/CN2024/088668**

(87) International publication number:
**WO 2024/250849 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.06.2023 CN 202310667453
29.08.2023 CN 202311113216**

(71) Applicants:
• **Huawei Technologies Co., Ltd.
Shenzhen, Guangdong 518129 (CN)**
• **Institute of Computing Technology of Chinese
Academy of Sciences
Beijing 100190 (CN)**

(72) Inventors:
• **MA, Penghao
Shenzhen, Guangdong 518129 (CN)**
• **LI, Yinghao
Shenzhen, Guangdong 518129 (CN)**
• **ZHANG, Ruge
Beijing 100190 (CN)**
• **YAN, Baicheng
Shenzhen, Guangdong 518129 (CN)**
• **WANG, Zhe
Shenzhen, Guangdong 518129 (CN)**
• **WANG, Long
Shenzhen, Guangdong 518129 (CN)**
• **JIA, Haipeng
Beijing 100190 (CN)**

(74) Representative: **Körber, Martin Hans et al
Mitscherlich PartmbB
Karlstraße 7
80333 München (DE)**

(54) **FFT EXECUTION METHOD, PROCESSOR, AND COMPUTING DEVICE**

(57) Embodiments disclosed in this application pertain to the field of computing technologies, and in particular, to a method for performing FFT, a processor, and a computing device. The method includes: A processor responds to an execution request of fast Fourier transform FFT calculation of an application, and decomposes the FFT calculation into a plurality of calculation stages. The processor sequentially executes the plurality of calculation stages, where when a target calculation stage is executed, a vector operation unit performs rotation factor calculation, and a matrix operation unit performs DFT calculation. After the execution of the plurality of calculation stages is completed, the processor determines an execution result of the FFT calculation based on an execution result of a last calculation stage, and returns the execution result to the application. According to this application, the processor may jointly implement the FFT calculation based on the vector operation unit and the matrix operation unit, so that efficiency of performing the FFT calculation by the processor can be improved.

A processor responds to an execution request of fast Fourier transform FFT calculation of an application — 501

Decompose the FFT calculation into a plurality of calculation stages, where the plurality of calculation stages include at least one target calculation stage, and the target calculation stage includes rotation factor calculation and discrete Fourier transform DFT calculation obtained by splitting the FFT calculation — 502

Sequentially execute the plurality of calculation stages, where when the target calculation stage is executed, a vector operation unit performs the rotation factor calculation, and a matrix operation unit performs the DFT calculation — 503

After the execution of the plurality of calculation stages is completed, determine an execution result of the FFT calculation based on an execution result of a last calculation stage, and return the execution result to the application — 504

FIG. 5

**Description**

This application claims priorities to Chinese Patent Application No. 202310667453.9, filed on June 6, 2023 and entitled "APPLICATION OPTIMIZATION METHOD", and to Chinese Patent Application No. 202311113216.4, filed on August 29, 2023 and entitled "METHOD FOR PERFORMING FFT, PROCESSOR, AND COMPUTING DEVICE", both of which are incorporated herein by reference in their entireties.

**TECHNICAL FIELD**

This application relates to the field of computer technologies, and in particular, to a method for performing FFT, a processor, and a computing device.

**BACKGROUND**

Discrete Fourier transform (Discrete Fourier Transform, DFT) is a common technology in the computer field, and is used to transform discrete time domain data and discrete frequency domain data. Generally, DFT may be performed by using a fast Fourier transform (Fast Fourier Transform, FFT) technology, to improve processing efficiency.

In a related technology, FFT may be implemented by a processor with a scalar operation unit and/or a vector (vector) operation unit, that is, FFT may be implemented through scalar operation and/or vector operation. However, efficiency of implementing FFT through the scalar operation and/or the vector operation is still not high.

**SUMMARY**

Embodiments of this application provide a method for performing FFT, a processor, and a computing device, to improve efficiency of performing FFT. The technical solutions are as follows.

According to a first aspect, a method for performing FFT is provided. The method is performed by a processor including a vector operation unit and a matrix operation unit. The method for performing FFT performed by the processor includes:

The processor responds to an execution request of fast Fourier transform FFT calculation of an application; decomposes the FFT calculation into a plurality of calculation stages, where the plurality of calculation stages include at least one target calculation stage, and the target calculation stage includes rotation factor calculation and discrete Fourier transform DFT calculation obtained by splitting the FFT calculation; sequentially executes the plurality of calculation stages, where when the target calculation stage is executed, the vector operation unit performs the rotation factor calculation, and the matrix operation unit performs the DFT calculation; and after the execution of the plurality of calculation stages is completed, determines an execution result of the FFT calculation based on an execution result of a last calculation stage, and returns the execution result to the application.

In the solution shown in this application, in a process of performing the FFT calculation, the processor may implement, based on the vector operation unit, complex vector multiplication calculation corresponding to a rotation factor and input data, and implement DFT calculation on rotated input data and a DFT matrix based on the matrix operation unit. In this way, the rotation factor calculation and the DFT calculation are respectively implemented based on the vector operation unit and the matrix operation unit. Compared with implementations of rotation factor calculation and DFT calculation based on only a scalar operation unit or a vector operation unit, in this solution, calculation efficiency of the rotation factor calculation and the DFT calculation can be improved, thereby improving efficiency of performing the FFT calculation by the processor.

In an implementation, the rotation factor calculation includes complex vector multiplication calculation on input data in the target calculation stage and a corresponding rotation factor, and that the vector operation unit performs the rotation factor calculation includes: The vector operation unit performs complex multiplication calculation on the input data in the target calculation stage and the corresponding rotation factor, to obtain a calculation result, where the calculation result includes input data of each butterfly unit in the target calculation stage.

In the solution shown in this application, the vector operation unit performs the complex vector multiplication calculation once, to implement complex multiplication calculation on the input data and a plurality of rotation factors. This can improve efficiency of performing the rotation factor calculation by the processor.

In an implementation, the DFT calculation includes complex matrix multiplication calculation on a DFT matrix and the input data of each butterfly unit in the target calculation stage, and that the matrix operation unit performs the DFT calculation includes: obtaining real part data and imaginary part data in the input data of each butterfly unit; obtaining real part data and imaginary part data of each column of elements in the DFT matrix; and implementing the complex matrix multiplication calculation based on the real part data and the imaginary part data that correspond to each butterfly unit, the real part data and the imaginary part data that correspond to the DFT matrix, and the matrix operation unit.

In the solution shown in this application, when the DFT calculation is implemented based on the matrix operation unit, the real part data and the imaginary part data in the input data may be separated, to respectively form a real part data matrix and an imaginary part data matrix that are calculated with the DFT matrix. In this way, the real part data and the imaginary part data are separately calculated with the DFT matrix, so that discontinuous access to the real part data and the imaginary part data can be avoided, thereby improving efficiency of the DFT calculation.

In an implementation, the implementing the complex matrix multiplication calculation based on the real part data and the imaginary part data that correspond to each butterfly unit, the real part data and the imaginary part data that correspond to the DFT matrix, and the matrix operation unit includes: forming a first real part matrix by row by using the real part data in the input data of each butterfly unit; forming a first imaginary part matrix by row by using the imaginary part data in the input data of each butterfly unit; forming a second real part matrix by column by using the real part data included in each column of elements in the DFT matrix; forming a second imaginary part matrix by column by using the imaginary part data included in each column of elements in the DFT matrix; and implementing the complex matrix multiplication calculation based on the first real part matrix, the first imaginary part matrix, the second real part matrix, the second imaginary part matrix, and the matrix operation unit.

In the solution shown in this application, the real part data and the imaginary part data in the input data on which the DFT calculation is performed form the first real part matrix and the first imaginary part matrix, and the DFT matrix is divided into the second real part matrix and the second imaginary part matrix. In this way, the matrix operation unit separately performs the complex matrix multiplication calculation on the first real part matrix, the first imaginary part matrix, the second real part matrix, and the second imaginary part matrix, so that a size of the matrix on which the matrix multiplication calculation is performed can be reduced, storage space occupied by the matrix is reduced, calculation efficiency of the matrix is improved, and discontinuous access to the real part data and the imaginary part data is avoided, thereby further improving efficiency of the DFT calculation.

In an implementation, a quantity of columns in the DFT matrix is N, and the implementing the complex matrix multiplication calculation based on the first real part matrix, the first imaginary part matrix, the second real part matrix, the second imaginary part matrix, and the matrix operation unit includes: adding a $y^{th}$ row in the first real part matrix to an $x^{th}$ row, and deleting real part data of the $y^{th}$ row to obtain a third real part matrix, where y=N+2-x, when N is an even number, $x \in [2, N/2]$, or when N is an odd number, $x \in [2, (N+1)/2]$; subtracting a $y^{th}$ row from an $x^{th}$ row in the first imaginary part matrix, and deleting imaginary part data of the $y^{th}$ row to obtain a third imaginary part matrix; forming a fourth real part matrix by using first M columns in the second real part matrix, where when N is an even number, M=N/2+1, or when N is an odd number, M=(N+1)/2; forming a fourth imaginary part matrix by using first M columns in the second imaginary part matrix; and inputting the third real part matrix, the third imaginary part matrix, the fourth real part matrix, and the fourth imaginary part matrix to the matrix operation unit, so that the matrix operation unit performs the complex matrix multiplication calculation.

In the solution shown in this application, sizes of the first real part matrix, the first imaginary part matrix, the second real part matrix, and the second imaginary part matrix on which the DFT calculation is performed are reduced based on symmetry of the DFT matrix, to obtain a corresponding third real part matrix, third imaginary part matrix, fourth real part matrix, and fourth imaginary part matrix. Then, the matrix operation unit may perform the complex matrix multiplication calculation on the third real part matrix, the third imaginary part matrix, the fourth real part matrix, and the fourth imaginary part matrix that are obtained by reducing the sizes, to obtain a calculation result of the DFT calculation. In this way, the size of the matrix is reduced, so that efficiency of performing the DFT calculation by the processor can be further improved.

In an implementation, a calculation result of each calculation stage in the FFT calculation is formed by output data of a butterfly unit included in the calculation stage, and the method further includes: for each calculation stage, reading input data in the calculation stage in batches based on a specified read stride before the calculation is performed, and separately storing the input data read each time in a specified quantity of vector registers, where the specified quantity is the same as a value of the specified read stride, the specified read stride is equal to a ratio of a length of the input data on which the FFT calculation is performed to a specified value, and the specified value is equal to a product of radixes respectively corresponding to the calculation stage and another calculation stage in which the calculation is performed; and for each calculation stage, sequentially obtaining output data of each butterfly unit after the calculation is completed, storing obtained output data of a $1^{st}$ butterfly unit in a memory based on a specified storage interval, and storing obtained output data of another butterfly unit after the $1^{st}$ butterfly unit in a position, in the memory, after a position in which output data of a butterfly unit is stored last time, where the specified storage interval is equal to a ratio of the length of the input data on which the FFT calculation is performed to a radix of the calculation stage.

In the solution shown in this application, the input data is read based on the specified read stride in each calculation stage in the FFT calculation, and the output data is stored based on an execution storage interval, so that a new butterfly network can be constructed. In the butterfly network, input data corresponding to a same rotation factor in each calculation stage in the FFT calculation may be continuously arranged. In this way, the input data corresponding to each calculation stage may be continuously read, and then the input data corresponding to the same rotation factor is stored in different vector registers, so that input data of each butterfly unit in the calculation stage may be read. In this way, compared with a present butterfly network, in this butterfly network, discontinuous reading of the input data in the calculation stage can be avoided when the input data of the butterfly unit is read. Therefore, the butterfly network provided in this application can improve efficiency of the rotation factor calculation.

In an implementation, the rotation factor calculation includes complex vector multiplication calculation on a DFT matrix and a rotation factor corresponding to input data in the target calculation stage, and the DFT calculation includes complex matrix multiplication calculation on the input data in the target calculation stage and the DFT matrix.

In the solution shown in this application, in the target calculation stage, the input data may be stored in a plurality of butterfly units corresponding to a same rotation factor. Therefore, complex multiplication calculation needs to be separately performed on the input data of the plurality of butterfly units and the same rotation factor, and complex matrix multiplication operation needs to be performed on calculation results of the complex multiplication calculation corresponding to the plurality of butterfly units and a same DFT matrix. Therefore, in this application, the rotation factor calculation may be set to calculation on the rotation factor and the DFT matrix, and then the DFT calculation is set to calculation on the input data in the target calculation stage and a DFT matrix obtained by performing the calculation. In this way, one time of calculation is performed on the rotation factor and the DFT matrix, so that a plurality of times of calculation on the input data and the rotation factor can be avoided, and efficiency of performing the FFT calculation by the processor can be improved.

In an implementation, that the vector operation unit performs the rotation factor calculation includes: forming a fifth real part matrix by row by using real part data in input data of each butterfly unit, and forming a fifth imaginary part matrix by row by using imaginary part data in the input data of each butterfly unit; and forming a sixth real part matrix by column by using real part data included in each column of elements in the DFT matrix, and forming a sixth imaginary part matrix by column by using imaginary part data included in each column of elements in the DFT matrix. The vector operation unit multiplies real part data of a rotation factor corresponding to an $s^{th}$ row in the fifth real part matrix by an $s^{th}$ column in the sixth real part matrix to obtain a seventh real part matrix, and multiplies imaginary part data of a rotation factor corresponding to an $s^{th}$ row in the fifth imaginary part matrix by an $s^{th}$ column in the sixth imaginary part matrix to obtain a seventh imaginary part matrix, where $s \in [1, N]$, and N is a quantity of columns in the DFT matrix.

That the matrix operation unit performs the DFT calculation includes: implementing the complex matrix multiplication calculation based on the fifth real part matrix, the fifth imaginary part matrix, the seventh real part matrix, the seventh imaginary part matrix, and the matrix operation unit.

In the solution shown in this application, the rotation factor calculation is set to calculation on the rotation factor and the DFT matrix, and then the DFT calculation is set to calculation on the input data in the target calculation stage and a DFT matrix obtained by performing the calculation. In addition, when the rotation factor calculation and the DFT calculation are performed, the real part data and the imaginary part data may be separately calculated, so that efficiency of performing the FFT calculation by the processor can be further improved.

In an implementation, when N is an even number, $s \in [2, N/2]$, or when N is an odd number, $s \in [2, (N+1)/2]$; and before the forming a fifth real part matrix by row by using real part data in input data of each butterfly unit, the method includes: performing complex multiplication calculation on input data of an $r^{th}$ row in the input data of each butterfly unit and a compensation rotation factor to obtain updated input data of the $r^{th}$ row, where the compensation rotation factor is calculated by using rotation factors respectively corresponding to the input data of the $r^{th}$ row and input data of the $s^{th}$ row in the input data of each butterfly unit, and r=N+2-s; and

the implementing the complex matrix multiplication calculation based on the fifth real part matrix, the fifth imaginary part matrix, the seventh real part matrix, the seventh imaginary part matrix, and the matrix operation unit includes: adding an $r^{th}$ row in the fifth real part matrix to an $s^{th}$ row, and deleting real part data of the $r^{th}$ row to obtain an eighth real part matrix; and subtracting an $r^{th}$ row from an $s^{th}$ row in the fifth imaginary part matrix, and deleting imaginary part data of the $r^{th}$ row to obtain an eighth imaginary part matrix; forming a ninth real part matrix by using first M columns in the seventh real part matrix, and forming a ninth imaginary part matrix by using first M columns in the seventh imaginary part matrix, where when N is an even number, M=N/2+1, or when N is an odd number, M=(N+1)/2; and inputting the eighth real part matrix, the eighth imaginary part matrix, the ninth real part matrix, and the ninth imaginary part matrix to the matrix operation unit, so that the matrix operation unit performs the complex matrix multiplication calculation to obtain a result matrix, where first M columns of data in the result matrix are respectively output data of M butterfly units in the target calculation stage.

In the solution shown in this application, when the complex matrix multiplication calculation is performed on the input data and a DFT matrix obtained by performing the rotation factor calculation, sizes of the fifth real part matrix and the fifth imaginary part matrix that correspond to the input data, and the seventh real part matrix and the seventh imaginary part matrix that correspond to the DFT matrix may be further reduced based on the symmetry of the DFT matrix. In this way, efficiency of performing the DFT calculation by the processor can be further improved.

According to a second aspect, a processor is provided. The processor includes a vector operation unit and a matrix operation unit. The processor is configured to implement the method for performing FFT provided in any one of the first aspect and the implementations of the first aspect. The vector operation unit included in the processor is configured to perform a vector operation included in FFT calculation, and the matrix operation unit is configured to perform a matrix operation included in the FFT calculation.

According to a third aspect, a computing device is provided. The computing device includes a memory and the processor in the second aspect. The memory stores at least one instruction, and the processor is configured to perform the at least one instruction, to implement the method for performing FFT provided in any one of the first aspect and the implementations of the first aspect.

According to a fourth aspect, a computer-readable storage medium is provided. The computer-readable storage medium stores computer program code, and when the computer program code is executed by a computer device, the computer device is enabled to perform the method for performing FFT provided in any one of the first aspect and the implementations of the first aspect.

According to a fifth aspect, a computer program product including instructions is provided. When the computer program product runs on a computer device, the computer device is enabled to perform the method for performing FFT provided in any one of the first aspect and the implementations of the first aspect.

## BRIEF DESCRIPTION OF DRAWINGS

FIG. 1 is a flowchart of implementing 18-point FFT calculation according to Cooley-Tukey according to an embodiment of this application;
FIG. 2 is a diagram of a structure of a butterfly unit according to an embodiment of this application;
FIG. 3 is a diagram of a structure of a computing device according to an embodiment of this application;
FIG. 4 is a diagram of a structure of a processor according to an embodiment of this application;
FIG. 5 is a flowchart of a method for performing FFT according to an embodiment of this application; and
FIG. 6 is a diagram of a structure of a butterfly network according to an embodiment of this application.

## DESCRIPTION OF EMBODIMENTS

To make the objectives, technical solutions, and advantages of this application clearer, the following further describes the implementations of this application in detail with reference to the accompanying drawings.

Discrete Fourier transform (Discrete Fourier Transform, DFT) is a discrete form of Fourier transform on both time domain data and frequency domain data, and is used to transform discrete time domain sampling data into discrete frequency domain sampling data. In a data form, input data (the discrete time domain sampling data) and output data (the discrete frequency domain data) of the DFT are complex sequences with finite lengths, and the lengths of the two complex sequences are equal.

Fast Fourier transform (Fast Fourier Transform, FFT) is a fast method for calculating the DFT or DFT inverse transform. Compared with the DFT, the FFT has lower calculation complexity.

A Cooley-Tukey (Cooley-Tukey) algorithm is a common FFT algorithm. According to a divide and conquer strategy, in the algorithm, DFT whose length of a complex sequence is N may be decomposed into DFT whose lengths are N1 and N2, and complex multiplication calculation is separately performed on the DFT whose lengths are N1 and N2 and a rotation factor, where N=N1*N2.

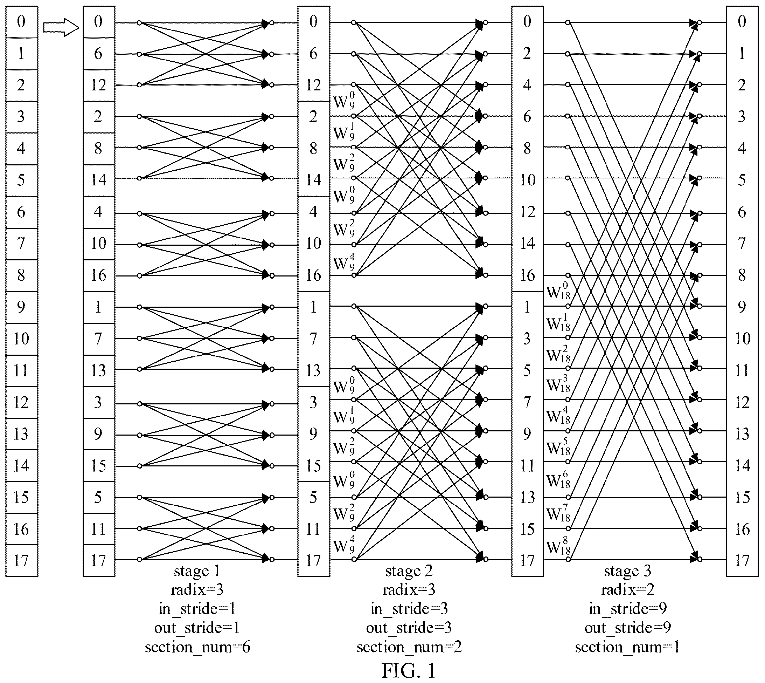

FIG. 1 is a flowchart of implementing 18-point FFT calculation according to Cooley-Tukey. The flowchart may be referred to as a butterfly network. As shown in FIG. 1, a calculation process of the FFT calculation may be decomposed into a plurality of calculation stages (stages). A quantity of calculation stages is equal to a quantity of radixes (radixes) obtained by dividing a length of input data. The input data is a complex sequence, and the length of the input data is a length of the complex sequence. FFT calculation whose length of input data is N may be referred to as N-point FFT calculation. For example, for the N-point FFT calculation, it is assumed that N may be decomposed into N1, N2, ..., and Ni (N=N1*N2*...*Ni), and then i calculation stages may be included in the N-point FFT calculation. N1, N2, ..., Ni may be referred to as radixes. N1 is a radix corresponding to a 1$^{st}$ calculation stage, N2 is a radix corresponding to a 2$^{nd}$ calculation stage, and Ni is a radix corresponding to an i$^{th}$ calculation stage.

In the FFT calculation, input data in the 1$^{st}$ calculation stage is input data corresponding to performing the FFT calculation. For another calculation stage after the 1$^{st}$ calculation stage, input data in each calculation stage is output data in a previous calculation stage, and lengths of input data in the calculation stages are the same. One calculation stage may be divided into at least one section (section), and one section may be divided into at least one butterfly (butterfly) unit. Butterfly calculation is performed on each butterfly unit in the calculation stage, so that output data in the calculation stage may be obtained. One calculation stage includes N/Ni butterfly units, where N is a length of input data in the calculation stage, and Ni is a radix corresponding to the calculation stage. The input data in the calculation stage may form input data of each butterfly unit, and a length of the input data corresponding to each butterfly unit is equal to a radix of a calculation stage in which the butterfly unit is located. As shown in FIG. 1, the 18-point FFT calculation may be divided into three calculation stages. A radix corresponding to a 1$^{st}$ calculation stage is 3, including six butterfly units; a radix corresponding to a 2$^{nd}$

calculation stage is 3, including six butterfly units; and a radix corresponding to a 3$^{rd}$ calculation stage is 2, including nine butterfly units. In addition, in_stride in FIG. 1 is an input stride of a target calculation stage, and indicates a storage interval of input data of each butterfly unit in input data in a corresponding calculation stage. out_stride is an output stride of the target calculation stage, and indicates a storage interval of output data of each butterfly unit in output data in a corresponding calculation stage. section_num is a quantity of sections included in a calculation stage.

The butterfly calculation performed on the butterfly unit can be divided into rotation factor calculation and DFT calculation. In an example, the rotation factor calculation may be complex vector multiplication calculation on input data of the butterfly unit and a rotation factor, and the DFT calculation may be complex matrix multiplication calculation on rotated input data (input data obtained by performing complex multiplication calculation on original input data and a rotation factor) and a DFT matrix corresponding to the butterfly unit. The DFT matrix corresponding to the butterfly unit is related to a structure of the butterfly unit, and DFT matrices corresponding to butterfly units in each calculation stage are the same.

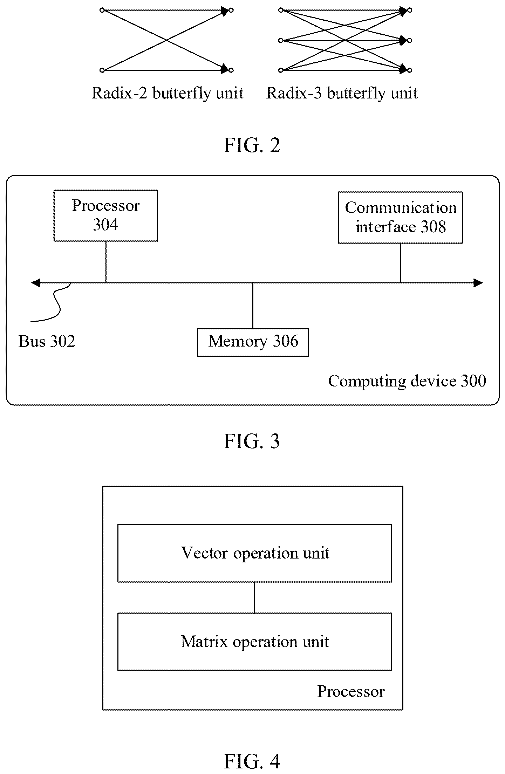

As shown in FIG. 2, FIG. 2 shows structures of a radix-2 butterfly unit and a radix-3 butterfly unit. A DFT matrix corresponding to the butterfly unit is a complex matrix. In an example, DFT calculation corresponding to a radix-N butterfly unit may be expressed as:

$$
\begin{bmatrix} Y(0) \\ Y(1) \\ \vdots \\ Y(k) \\ \vdots \\ Y(N-1) \end{bmatrix} = \begin{bmatrix} w_N^0 & w_N^0 & w_N^0 & \cdots & w_N^0 \\ w_N^0 & w_N^1 & w_N^2 & \cdots & w_N^{N-1} \\ \vdots & \vdots & \vdots & \cdots & \vdots \\ w_N^0 & w_N^k & w_N^{2k} & \cdots & w_N^{k(N-1)} \\ \vdots & \vdots & \vdots & \cdots & \vdots \\ w_N^0 & w_N^{(N-1)} & w_N^{2(N-1)} & \cdots & w_N^{(N-1)(N-1)} \end{bmatrix} \begin{bmatrix} x(0) \\ x(1) \\ \vdots \\ x(n) \\ \vdots \\ x(N-1) \end{bmatrix}.
$$

$$
\begin{bmatrix} x(0) \\ x(1) \\ \vdots \\ x(n) \\ \vdots \\ x(N-1) \end{bmatrix}
$$
is rotated input data corresponding to the radix-N butterfly unit,

$$
\begin{bmatrix} w_N^0 & w_N^0 & w_N^0 & \cdots & w_N^0 \\ w_N^0 & w_N^1 & w_N^2 & \cdots & w_N^{N-1} \\ \vdots & \vdots & \vdots & \cdots & \vdots \\ w_N^0 & w_N^k & w_N^{2k} & \cdots & w_N^{k(N-1)} \\ \vdots & \vdots & \vdots & \cdots & \vdots \\ w_N^0 & w_N^{(N-1)} & w_N^{2(N-1)} & \cdots & w_N^{(N-1)(N-1)} \end{bmatrix}
$$
is a DFT matrix corresponding to the radix-N butterfly unit, and

$$
\begin{bmatrix} Y(0) \\ Y(1) \\ \vdots \\ Y(k) \\ \vdots \\ Y(N-1) \end{bmatrix}
$$
is output data corresponding to the radix-N butterfly unit. $w_N^0$ to $w_N^{(N-1)(N-1)}$ are rotation factors.

In a related technology, FFT calculation is generally implemented based on a scalar operation unit and/or a vector operation unit, that is, the scalar operation unit and/or the vector operation unit perform/performs rotation factor calculation and DFT matrix calculation that are included in the FFT calculation, and performing efficiency is low.

Embodiments of this application provide a method for performing FFT calculation, so that the FFT calculation can be jointly implemented based on a vector operation unit and a matrix operation unit, thereby improving efficiency of performing the FFT calculation. FIG. 3 is a diagram of a structure of a computing device according to an embodiment of this application. As shown in FIG. 3, a computing device 300 may include a bus 302, a processor 304, and a memory 306.

Optionally, the computing device 300 may further include a communication interface 308. The processor 304, the memory 306, and the communication interface 308 communicate with each other through the bus 302. The computing device 300 may be a server or a terminal device. It should be understood that quantities of processors and memories in the computing device 300 are not limited in this application. The computing device 300 may be a device for running a model, or may be a terminal or a server. When the computing device 300 is the terminal, the computing device 300 includes but is not limited to a desktop computer, a mobile phone, a notebook computer, a tablet computer, or the like. When the computing device 300 is the server, the computing device 300 may be an independent server, may be a server cluster including a plurality of servers, may be a physical entity machine, may be a virtual machine or a container that is virtualized by using a virtualization technology, or the like.

The bus 302 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 3, but this does not mean that there is only one bus or only one type of bus. The bus 302 may include a path for transmitting information between components (for example, the memory 306, the processor 304, and the communication interface 308) of the computing device 300.

The processor 304 may include any one or more of processors such as a central processing unit (central processing unit, CPU), a graphics processing unit (graphics processing unit, GPU), a microprocessor (microprocessor, MP), or a digital signal processor (digital signal processor, DSP). The processor 304 may further include a vector operation unit, a matrix operation unit, and the like. The vector operation unit may be a scalable vector extension (Scalable Vector Extension, SVE) unit, and may be configured to perform rotation factor calculation included in FFT calculation. The matrix operation unit may be a scalable matrix unit (Scalable Matrix Unit, SME) that may be configured to perform DFT calculation included in the FFT calculation.

The memory 306 may include a volatile memory (volatile memory), for example, a random access memory (random access memory, RAM). The memory 306 may further include a non-volatile memory (non-volatile memory), for example, a read-only memory (read-only memory, ROM), a flash memory, a hard disk drive (hard disk drive, HDD), or a solid state drive (solid state drive, SSD). The foregoing memory may be a global memory.

The communication interface 308 uses a transceiver module, for example, but not limited to, a network interface card or a transceiver, to implement communication between the computing device 300 and another device or a communication network.

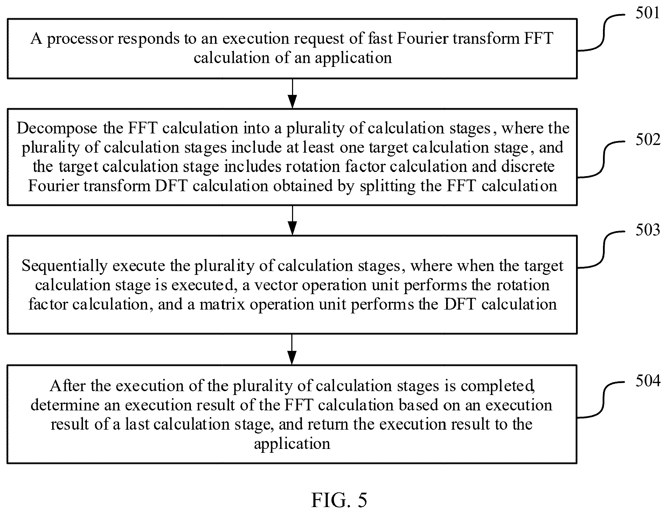

FIG. 4 is a diagram of a structure of a processor according to an embodiment of this application. The processor may be the processor 304 in the computing device in FIG. 3. As shown in FIG. 4, the processor includes a vector operation unit and a matrix operation unit. The processor may perform an operation method provided in embodiments of this application. FIG. 5 is a flowchart of a method for performing FFT according to an embodiment of this application. Refer to FIG. 5. The method for performing FFT performed by the processor includes the following steps.

Step 501: The processor responds to an execution request of fast Fourier transform FFT calculation of an application.

The application may be any application related to the FFT calculation, for example, may be a high-performance computing (High-Performance Computing, HPC) application or an artificial intelligence (Artificial Intelligence, AI) application. In a running process of the application, when needing to perform the FFT calculation, the application may send an execution request of FFT to the processor. For example, the application may be a VASP (Vienna Ab-initio Simulation Package). When a wave function needs to be solved in the VASP, a wave function solving request may be sent to the processor, where the wave function solving request is the execution request of the FFT. The wave function is a common function in the field of quantum mechanics. The wave function may be solved by performing FFT calculation on input data of the wave function, to obtain a solution result of the wave function.

In an example, for the method for performing FFT provided in this application, a person skilled in the art may compile a corresponding processing program into an FFT processing function, and add the FFT processing function to a mathematics library. The mathematics library may be stored in a computing device that executes an application, and includes a large quantity of processing functions. The processing functions may be used to implement various types of mathematical calculation in the application. When FFT calculation needs to be performed in the application, an execution request of the FFT may be sent to the processor, and then the processor may invoke and execute the FFT processing function to implement processing of the following steps.

Step 502: Decompose the FFT calculation into a plurality of calculation stages, where the plurality of calculation stages include at least one target calculation stage, and the target calculation stage includes rotation factor calculation and discrete Fourier transform DFT calculation obtained by splitting the FFT calculation.

In an example, after receiving the execution request of the FFT calculation, the processor may obtain a length of input data on which the FFT calculation is to be performed, and decompose the FFT calculation into the plurality of calculation stages. For example, the processor may decompose the length of the input data according to a Cooley-Tukey algorithm, to obtain each calculation stage in which the FFT calculation is performed on the input data and a radix corresponding to each calculation stage. For example, when a quantity of data elements in the input data is 8, 8 may be decomposed into 2*2*2. A process of performing FFT on the input data includes three calculation stages, and a radix corresponding to each calculation stage is 2. For example, when a quantity of data elements in the input data is 27, 27 may be decomposed into 3*3*3. In this case, a process of performing FFT on the input data includes three calculation stages, and a radix corresponding to each calculation stage is 3.

In the plurality of calculation stages corresponding to the FFT calculation, each calculation stage includes rotation factor calculation and DFT calculation. However, because a rotation factor in a 1st calculation stage is generally 1, rotation factor calculation in the 1st calculation stage may not be performed during implementation. In this embodiment of this application, the target calculation stage may be another calculation stage after the 1st calculation stage. The DFT calculation in the target calculation stage is DFT calculation in each butterfly unit in each section corresponding to data that is obtained by splitting, based on the radix, the input data in the target calculation stage.

Step 503: Sequentially execute the plurality of calculation stages, where when the target calculation stage is executed, a vector operation unit performs the rotation factor calculation, and a matrix operation unit performs the DFT calculation.

After determining the plurality of calculation stages corresponding to the FFT calculation, the processor may sequentially execute the plurality of calculation stages. When the 1st calculation stage is executed, matrix multiplication calculation may be implemented on the input data of FFT and a DFT matrix based on the matrix operation unit. When the target calculation stage after the 1st calculation stage is executed, the vector operation unit may perform the rotation factor calculation, and the matrix operation unit may perform the DFT calculation.

In an example, the rotation factor calculation includes complex vector multiplication calculation on the input data in the target calculation stage and a corresponding rotation factor, and the DFT calculation includes complex matrix multiplication calculation on rotated input data of each butterfly unit in the target calculation stage and the DFT matrix.

For the rotation factor calculation performed by the vector operation unit in step 503:

When the rotation factor calculation is performed, input data of a specified quantity of butterfly units may be respectively stored in vector registers, rotation factors corresponding to the specified quantity of butterfly units are stored in vector registers, and then complex vector multiplication calculation on the input data of the specified quantity of butterfly units and the corresponding rotation factors is implemented in the vector operation unit according to a vector multiplication instruction.

The following is an example of a rotation factor calculation method performed by the vector operation unit provided in this application.

Step A1: For a target computing node, if a radix of the target calculation stage is $R,$ input data of t butterfly units in one section in the target calculation stage may be read. Real part data in input data that is of one butterfly unit and that is read each time may be stored in R vector registers: $X^0_{real}, \cdots,$ and $X^{R-1}_{real}$, and imaginary part data in the input data may be stored in R vector registers: $X^0_{imag}, \cdots,$ and $X^{R-1}_{imag}$. $t = min\ (vscale, n\_butterfly)$, $vscale$ is a length of input data that can be stored in the vector register, and n_butterfly is a quantity of butterfly units in each section at this layer of butterfly.

Step A2: Separately read rotation factors corresponding to the t butterfly units in step A1, where real part data in the rotation factors corresponding to the butterfly units may be respectively stored in R vector registers: $T^0_{real}, \cdots,$ and $T^{R-1}_{real}$, and imaginary part data in the rotation factors corresponding to the butterfly units may be respectively stored in R vector registers: $T^0_{imag}, \cdots,$ and $T^{R-1}_{imag}$.

Step A3: Separately calculate a product of $T^i_{real}$ and $X^i_{real}$ according to an SVE multiplication instruction and store a product result in $X'^i_{rr}$, and calculate a product of $T^i_{real}$ and $X^i_{imag}$ according to the SVE multiplication instruction and store a product result in $X'^i_{ri}$; then calculate a result of subtracting a product of $T^i_{imag}$ and $X^i_{imag}$ from $X'^i_{rr}$ according to an SVE fusion multiplication and subtraction instruction and store the result in a vector register $X'^i_r$; and calculate a result of adding $X'^i_{ri}$ and a product of $T^i_{imag}$ and $X^i_{real}$ according to an SVE fusion multiplication and addition instruction and store the result in a vector register $X'^i_i$. Data stored in $X'^i_r$ is real part data included in result data obtained through calculation based on the rotation factors corresponding to the t butterfly units, and data stored in $X'^i_i$ is imaginary part data included in the result data obtained through calculation based on the rotation factors corresponding to the t butterfly units, and $i \in [0, R-1]$.

The result data obtained through calculation based on the rotation factors corresponding to the t butterfly units may be obtained by performing the foregoing steps A1 to A3. Based on same steps, rotation factor calculation corresponding to another butterfly unit in the target calculation stage may be further completed. Details are not described in embodiments of this application.

In the process of performing the rotation factor calculation included in the target calculation stage, the obtained result data may be used as input data on which the DFT calculation is performed in the target calculation stage to perform subsequent calculation. In this way, the rotation factor calculation and the DFT calculation are performed in parallel in the target calculation stage. This can improve efficiency of performing the FFT calculation.

In this embodiment of this application, complex multiplication calculation on the input data of the butterfly unit and the rotation factor may be converted into the complex vector multiplication calculation, and is implemented based on the vector operation unit. In this way, one time of the complex vector multiplication calculation can implement complex multiplication calculation on the input data and a plurality of rotation factors. This can improve efficiency of the rotation factor calculation in the FFT calculation.

**For the DFT calculation performed by the matrix operation unit in step 503:**

When the DFT calculation is performed, real part data and imaginary part data in input data of each butterfly unit may be obtained, real part data and imaginary part data of each column of elements in the DFT matrix are obtained, and complex matrix multiplication calculation is implemented based on the real part data and the imaginary part data that correspond to each butterfly unit, the real part data and the imaginary part data that correspond to the DFT matrix, and the matrix operation unit.

When the DFT calculation is performed, the input data of each butterfly unit is rotated input data. In this embodiment of this application, real part data and imaginary part data in the rotated input data are respectively stored in vector registers. Therefore, the real part data and the imaginary part data in the input data are separately calculated with the DFT matrix. In this way, continuous reading of the data and the imaginary part data can be implemented, and calculation efficiency of DFT is improved.

In an example, corresponding complex matrix multiplication calculation on the input data of each butterfly unit and the DFT matrix may include: forming a first real part matrix by row by using the real part data in the input data of each butterfly unit, and forming a first imaginary part matrix by row by using the imaginary part data in the input data of each butterfly unit; and forming a second real part matrix by column by using the real part data included in each column of elements in the DFT matrix, and forming a second imaginary part matrix by column by using the imaginary part data included in each column of elements in the DFT matrix; and implementing the complex matrix multiplication calculation based on the first real part matrix, the first imaginary part matrix, the second real part matrix, the second imaginary part matrix, and the matrix operation unit. In the first real part matrix, each row of elements may be real part data in rotated input data corresponding to one butterfly unit. In the first imaginary part matrix, each row of elements may be imaginary part data in rotated input data corresponding to one butterfly unit.

The following provides an example of a complex matrix multiplication calculation method performed by the matrix operation unit provided in this application.

Step B1: Initialize two matrix registers $ZA_r$ and $ZA_i$ by using all 0s.

Step B2: Load real part data of each column in the DFT matrix to r vector registers $d_r^0$ to $d_r^{r-1}$, and load imaginary part data of each column to r vector registers $d_i^0$ to $d_i^{r-1}$. $d_r^0$ to $d_r^{r-1}$ each store each column of elements in the second real part matrix, and $d_i^0$ to $d_i^{r-1}$ each store each column of elements in the second imaginary part matrix.

Step B3: Load, by row, real part data included in input data of n butterfly units in the target calculation stage to n vector registers $v_r^0$ to $v_r^{r-1}$, and load, by row, imaginary part data included in the input data of the n butterfly units to n vector registers $v_i^0$ to $v_i^{r-1}$. $v_r^0$ to $v_r^{r-1}$ each store each row of elements in the first real part matrix, and $v_i^0$ to $v_i^{r-1}$ each store each row of elements in the first imaginary part matrix.

Step B4: Implement an outer product of $d_r^k$ and $v_r^k$ according to an outer product accumulation instruction, and accumulate an outer product result in $ZA_r$; and implement an outer product of $d_r^k$ and $v_i^k$ according to an outer product accumulation instruction, and accumulate an outer product result in $ZA_i$, where $k \in [0, r-1]$.

Step B5: Implement a result of subtracting an outer product of $d_i^k$ and $v_i^k$ from $Z_r$ according to an outer product subtraction instruction, and accumulate the outer product in $ZA_r$; and implement an outer product of $d_i^k$ and $v_r^k$ according to an outer product subtraction instruction, and accumulate the outer product in $ZA_i$.

After step B4 and step B5 are performed, a calculation result of the complex matrix multiplication calculation performed by the matrix operation unit may be obtained, where the calculation result includes a real part matrix and an imaginary part matrix, the real part matrix is stored in $ZA_r$, and the imaginary part matrix is stored in $ZA_i$. In this way, operation is separately performed on the real part data and the imaginary part data through the two matrix registers and according to the outer product accumulation/subtraction instruction. This can reduce additional SVE instruction overheads and improve calculation efficiency.

In this embodiment of this application, when the matrix operation unit performs the DFT calculation, the DFT matrix may be decomposed into two matrices formed by real part data and imaginary part data, and then complex matrix multiplication calculation is performed on the two matrices formed by the real part data and the imaginary part data and two matrices formed by real part data and imaginary part data in corresponding input data. In this way, the real part data and the imaginary part data respectively form the matrices for calculation. Compared with a case in which the real part data and the imaginary part data are mixed into one matrix for calculation, in this application, discontinuous access to the real part data and the imaginary part data can be avoided, and efficiency of constructing the matrix can be improved; and in addition, a size of the matrix is reduced, storage space occupied by the matrix can be reduced, and calculation efficiency of the matrix can be improved.

Step 504: After the execution of the plurality of calculation stages is completed, determine an execution result of the FFT calculation based on an execution result of a last calculation stage, and return the execution result to the application.

After the execution of the plurality of calculation stages in the FFT calculation is completed, output data in the last calculation stage may be used as the execution result of the FFT calculation, and the execution result of FFT is returned to the application.

In this embodiment of this application, the complex multiplication calculation on the rotation factor is implemented based on the vector operation unit, and the complex matrix multiplication operation on the DFT matrix is implemented based on the matrix operation unit. This can improve efficiency of the FFT calculation.

The method for performing FFT provided in this application may be implemented based on the butterfly network shown in FIG. 1, or may be implemented based on another self-sorted or non-self-sorted butterfly network. When the method for performing FFT provided in this application is implemented based on the self-sorted butterfly network, sorting processing on the input data on which the FFT calculation is performed can be avoided, and efficiency of performing the FFT calculation by the processor can be further improved.

This embodiment of this application provides a method for performing the DFT calculation by the matrix operation unit. In the method, a size of the matrix on which the DFT calculation is performed can be reduced based on symmetry of the DFT matrix. This further improves efficiency of performing the DFT calculation by the matrix operation unit.

The symmetry of the DFT matrix includes: When a quantity N of columns in the DFT matrix is an even number, an $x^{th}$ column and a $y^{th}$ column in the DFT matrix are conjugately symmetric, where $x \in [2, N/2]$ and $y=N+2-x$. When a quantity N of columns in the DFT matrix is an odd number, an $x^{th}$ column and a $y^{th}$ column in the DFT matrix are conjugately symmetric, where $x \in [2, (N+1)/2]$ and $y=N+2-x$. For example, when a size of a DFT matrix W is $8 \times 8$, in the DFT matrix, a $2^{nd}$ column of elements and an $8^{th}$ column of elements are conjugately symmetric, a $3^{rd}$ column of elements and a $7^{th}$ column of elements are conjugately symmetric, and a $4^{th}$ column of elements and a $6^{th}$ column of elements are conjugately symmetric. In this way, after the second real part matrix is formed by using real part data in the DFT matrix, and the second imaginary part matrix is formed by using imaginary part data in the DFT matrix, an $x^{th}$ column of elements and a $y^{th}$ column of elements in the second real part matrix are equal, and an $x^{th}$ column of elements and a $y^{th}$ column of elements in the second imaginary part matrix are opposite.

When a matrix outer product is performed on the two matrices, if two columns with equal elements or two columns with opposite elements exist in one matrix, the following optimization may be performed.

$$\begin{bmatrix} a0 & a0 \\ a1 & a1 \end{bmatrix} \times \begin{bmatrix} b0 & b1 \\ b2 & b3 \end{bmatrix} = \begin{bmatrix} a0 \\ a1 \end{bmatrix} \times \begin{bmatrix} b0 + b2 & b1 + b3 \end{bmatrix}.$$

It can be learned from the foregoing formula that, when an outer product is performed on two matrices, if two columns with equal elements exist in one matrix, the two columns with equal elements may be combined into one column, to obtain an updated matrix. For the other matrix, addition may be performed on elements in two corresponding rows in the other matrix, and one row of elements is deleted, to obtain the other updated matrix. An outer product result of the two updated matrices is the same as an outer product result of the two matrices before the update. Because sizes of the two updated matrices are reduced compared with the two matrices before the update, efficiency of outer product calculation can be improved through the outer product calculation on the two updated matrices.

$$\begin{bmatrix} a0 & a0 \\ a1 & a1 \end{bmatrix} \times \begin{bmatrix} b0 & b1 \\ b2 & b3 \end{bmatrix} = \begin{bmatrix} a0 \\ a1 \end{bmatrix} \times [b0 - b2 \quad b1 - b3].$$

It can be learned from the foregoing formula that, when an outer product is performed on two matrices, if two columns with opposite elements exist in one matrix, the two columns with equal elements may be combined into one column, to obtain an updated matrix. For the other matrix, subtraction may be performed on elements in two corresponding rows in the other matrix, and one row of elements is deleted, to obtain the other updated matrix. An outer product result of the two updated matrices is the same as an outer product result of the two matrices before the update. Because sizes of the two updated matrices are reduced compared with the two matrices before the update, efficiency of outer product calculation can be improved through the outer product calculation on the two updated matrices.

Correspondingly, in this embodiment of this application, the first real part matrix, the first imaginary part matrix, the second real part matrix, and the second imaginary part matrix on which the outer product calculation is performed are optimized based on the symmetry of the DFT matrix and the optimization methods shown in the foregoing two formulas. This can improve efficiency of performing the outer product calculation on the first real part matrix, the first imaginary part matrix, the second real part matrix, and the second imaginary part matrix. That the matrix operation unit performs the DFT calculation in step 503 may further include the following steps.

Step C1: Add a $y^{th}$ row in the first real part matrix to an $x^{th}$ row, and delete real part data of the $y^{th}$ row to obtain a third real part matrix, where y=N+2-x, when N is an even number, $x \in [2, N/2]$, or when N is an odd number, $x \in [2, (N+1)/2]$.

Step C2: Subtract a $y^{th}$ row from an $x^{th}$ row in the first imaginary part matrix, and delete imaginary part data of the $y^{th}$ row to obtain a third imaginary part matrix.

Step C3: Form a fourth real part matrix by using first M columns in the second real part matrix, where when N is an even number, M=N/2+1, or when N is an odd number, M=(N+1)/2.

Step C4: Form a fourth imaginary part matrix by using first M columns in the second imaginary part matrix.

After the updated third real part matrix and the updated third imaginary part matrix that correspond to the input data on which the DFT calculation is performed, and the updated fourth real part matrix and the updated fourth imaginary part matrix that correspond to the DFT matrix are obtained, the complex matrix multiplication calculation may be performed by the matrix operation unit on the third real part matrix, the third imaginary part matrix, the fourth real part matrix, and the fourth imaginary part matrix.

The following is an example of a complex matrix multiplication calculation method performed by the matrix operation unit based on the symmetry of the DFT matrix (a size of the DFT matrix is 8×8) provided in this embodiment of this application.

Step D1: Initialize two matrix registers $ZA_r$ and $ZA_i$ by using all 0s.

Step D2: Load real part data of first five columns in the DFT matrix to r vector registers $d_r^0$ to $d_r^4$, and load imaginary part data of first five columns in the DFT matrix to r vector registers $d_i^0$ to $d_i^4$, where $d_r^0$ to $d_r^4$ each store each column of elements in the fourth real part matrix, and $d_i^0$ to $d_i^4$ each store each column of elements in the fourth imaginary part matrix.

Step D3: Load, by row, real part data included in input data that is of eighth butterfly units and on which the DFT calculation is performed to eighth vector registers $e_r^0$ to $e_r^7$, and load, and load, by row, imaginary part data included in the input data of the eighth butterfly units to eighth vector registers $e_i^0$ to $e_i^7$. $e_r^0$ to $e_r^7$ each store each row of elements in the first real part matrix, and $e_r^0$ to $e_r^7$ each store each row of elements in the first imaginary part matrix.

Step D4: Separately perform addition operation on $e_r^1$ and $e_r^7$, $e_r^2$ and $e_r^6$, $e_r^3$ and $e_r^5$ according to an SVE instruction, and store results in $v_r^0$ to $v_r^5$; and separately perform subtraction operation on $e_i^1$ and $e_i^7$, $e_i^2$ and $e_i^6$, $e_i^3$ and $e_i^5$ according to an SVE instruction, and store results in $v_i^0$ to $v_i^5$. $v_r^0$ to $v_r^5$ each store each row of elements in the third real part matrix, and $v_i^0$ to $v_i^5$ each store each row of elements in the third imaginary part matrix.

Step D5: Implement an outer product of $d_r^k$ and $v_r^k$ according to an outer product accumulation instruction, and accumulate an outer product result in $ZA_r$; and implement an outer product of $d_i^k$ and $v_i^k$ according to an outer product accumulation instruction, and accumulate an outer product result in $ZA_i$.

Step D6: Refresh $ZA_r$ again based on a result of subtracting the outer product of $d_i^k$ and $v_i^k$ from $ZA_r$, and

refresh $ZA_i$ again based on a result of adding $ZA_i$ and the outer product of $d_i^k$ and $v_r^k$.

After step D5 and step D6 are performed, a calculation result of the complex matrix multiplication calculation performed by the matrix operation unit may be obtained.

In this embodiment of this application, the DFT calculation is optimized for the symmetry of the DFT matrix. In the foregoing optimization method, the SVE addition/subtraction instruction whose latency is low is used to replace the SME outer product accumulation/subtraction instruction whose latency is high, thereby reducing execution overheads of the instruction. In addition, due to the symmetry, only some elements need to be stored in the DFT matrix, thereby reducing storage overheads and fetch overheads. Further, an SVE calculation instruction is interleaved into SME calculation, so that a pipeline (pipeline) of a chip can be better used, thereby improving overall calculation efficiency.

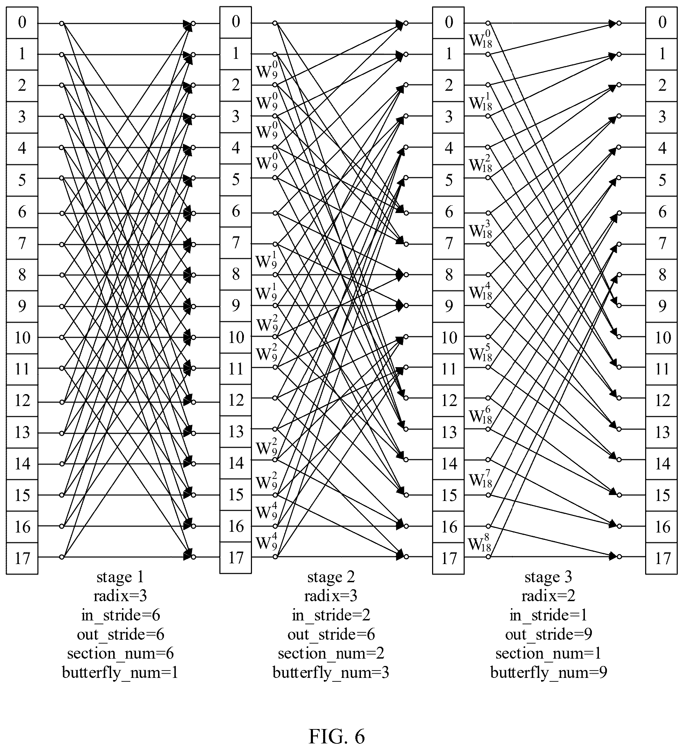

FIG. 6 is a diagram of a structure of a new butterfly network according to an embodiment of this application. In FFT calculation, input data at a same position in different sections in a target calculation stage corresponds to a same rotation factor. In the butterfly network shown in FIG. 6, input data corresponding to a same rotation factor may be arranged to adjacent positions in input data in a calculation stage.

A method for constructing the butterfly network shown in FIG. 6 may be as follows:
for each calculation stage, reading input data in the calculation stage in batches based on a specified read stride before the calculation is performed, and separately storing the input data read each time in a specified quantity of vector registers, where the specified quantity is the same as a value of the specified read stride, the specified read stride is equal to a ratio of a length of the input data on which the FFT calculation is performed to a specified value, and the specified value is equal to a product of radixes respectively corresponding to the calculation stage and another calculation stage in which the calculation is performed.

The specified read stride corresponding to each calculation stage is in_stride corresponding to each calculation stage in the butterfly network shown in FIG. 6. in_stride1 of a 1st calculation stage is equal to $N/R_0$, where $N$ is a length of input data in the 1st calculation stage, and $R_0$ is a radix of the 1st calculation stage. in_stride i of an ith calculation stage after the 1st calculation stage is equal to $N/(R_0 * \prod_{j=1}^{j=i} R_i)$, and $R_i$ is a radix corresponding to the ith calculation stage.

As shown in FIG. 6, in a 2nd calculation stage in the butterfly network in FIG. 6, in_stride is 2, that is, a specified read stride is 2. Therefore, when input data in the calculation stage is read, two pieces of input data may be read each time, and then the two pieces of input data are respectively stored in two vector registers. For example, 0 and 1, 2 and 3, and 4 and 5 may be continuously read. Then, the read 0, 2, and 4 are stored in a vector register A, and the read 1, 3, and 5 are stored in a vector register B. In this way, input data in the vector register A and input data in the vector register B correspond to a same rotation factor.

The method for constructing the butterfly network shown in FIG. 6 may further includes: for each calculation stage, sequentially obtaining output data of each butterfly unit after the calculation is completed, storing obtained output data of a 1st butterfly unit in a memory based on a specified storage interval, and storing obtained output data of another butterfly unit after the 1st butterfly unit in a position, in the memory, after a position in which output data of a butterfly unit is stored last time, where the specified storage interval is equal to a ratio of the length of the input data on which the FFT calculation is performed to a radix of the calculation stage.

The specified storage interval corresponding to each calculation stage is out_stride corresponding to each calculation stage in the butterfly network shown in FIG. 6. out_stride i of an ith calculation stage is equal to $N/R_i$, where $R_i$ is a radix corresponding to the ith calculation stage.

As shown in FIG. 6, in a 2nd calculation stage in the butterfly network in FIG. 6, out_stride is 6, that is, a specified storage interval is 6. Therefore, when input data in the calculation stage is stored, storage is performed based on the specified storage interval. For example, for outputs 0, 6, and 12 of a 1st butterfly unit, 0 may be stored in a start position of output data in a 2nd calculation stage in the memory, then 6 is stored in a position offset by 6 storage positions after the position that stores 0, and then 12 is stored in a position offset by 6 storage positions after the position that stores 6. For outputs 1, 7, and 13 of a 2nd butterfly unit, 1 may be stored in a position offset by one storage position after a position that stores 0, 7 may be stored in a position offset by one storage position after a position that stores 6, and 13 may be stored in a position offset by one storage position after a position that stores 12.

Starting from the 1st calculation stage in the FFT calculation, the input data in the calculation stage is read based on the specified read stride provided in this embodiment of this application, and the output data in the calculation stage is stored based on the specified storage interval provided in this embodiment of this application, so that a calculation procedure corresponding to the butterfly network shown in FIG. 6 can be constructed. In the butterfly network shown in FIG. 6, in the input data in each calculation stage, input data corresponding to a same rotation factor may be adjacent. In addition, the butterfly network shown in FIG. 6 is a butterfly network corresponding to 18-point FFT calculation, and includes three calculation stages in total. In a 1st calculation stage, correspondingly, a radix is 3, in_stride is 6, out_stride is 6, a quantity of sections is 6, and each section includes one butterfly unit. In a 2nd calculation stage, correspondingly, a radix is 3, in_stride is 2, out_stride is 6, a quantity of sections is 2, and each section includes three butterfly units. In a 3rd

calculation stage, correspondingly, a radix is 2, in_stride is 1, out_stride is 9, a quantity of sections is 1, and the section includes nine butterfly units.

In an example, the butterfly network shown in FIG. 6 is applied to perform the FFT calculation, and input data corresponding to a same rotation factor in each calculation stage is stored continuously. Therefore, the input data in the calculation stage may be read continuously, and the input data corresponding to the same rotation factor may be respectively stored in different vector registers. A quantity of vector memories is the same as a quantity of pieces of the input data corresponding to the same rotation factor.

In this way, the input data stored in each vector register corresponds to the same rotation factor. Therefore, the rotation factor corresponding to the input data stored in the vector register may be loaded to the vector register, and then the rotation factor calculation may be performed on the rotation factor stored in the vector register and the input data stored in each vector register.

In this way, compared with the FFT calculation performed based on the butterfly network shown in FIG. 1, the FFT calculation performed based on the butterfly network shown in FIG. 6 can implement continuous reading of the input data in the calculation stage, thereby avoiding discontinuous access to the input data based on the butterfly unit. In addition, a quantity of times of reading the rotation factor may be reduced, thereby avoiding reading the rotation factor corresponding to each butterfly unit. It can be seen that the FFT calculation is performed based on the butterfly network shown in FIG. 6, so that efficiency of performing the rotation factor calculation can be further improved.

In addition, reading, storing, and calculating the input data and the rotation factor may be specifically divided into reading, storing, and calculating real part data and imaginary part data. A specific process of reading, storing, and calculating the real part data and the imaginary part data is similar to the foregoing steps A1 to A3. Details are not described in this application.

Based on the butterfly network shown in FIG. 6, the rotation factor calculation included in the target calculation stage may be complex vector multiplication calculation on the DFT matrix and the rotation factor corresponding to the input data in the target calculation stage, and the DFT calculation may be complex matrix multiplication calculation on the input data in the target calculation stage and the DFT matrix.

If a quantity of sections included in the target calculation stage is large, a quantity of butterfly units corresponding to a same rotation factor is large in the target calculation stage. In this way, for the quantity of butterfly units corresponding to the same rotation factor, complex vector multiplication calculation needs to be separately performed on input data of the quantity of butterfly units and the same rotation factor, and then complex matrix multiplication calculation needs to be separately performed on the input data of the quantity of butterfly units and a same DFT matrix. Therefore, in this embodiment of this application, for a target calculation stage that includes a large quantity of sections (for example, when the quantity of sections is greater than a length MVL supported by a matrix operation unit SME, or is greater than a quantity threshold set by a skilled person), the rotation factor may be first multiplied by the DFT matrix to complete the rotation factor calculation, and then the input data of the butterfly unit is multiplied by a DFT matrix obtained by performing the rotation factor calculation. In this way, one time of the multiplication operation on the rotation factor and the DFT matrix may be used to replace the plurality of times of multiplication operation performed on the rotation factor and the input data of the plurality of butterfly units, thereby improving efficiency of performing the FFT calculation. Based on the butterfly network shown in FIG. 6, a process of performing the rotation factor calculation and the DFT calculation may be specifically as follows.

Step E1: Form a fifth real part matrix by row by using real part data in input data of each butterfly unit, and form a fifth imaginary part matrix by row by using imaginary part data in the input data of each butterfly unit.

Step E2: Form a sixth real part matrix by column by using real part data included in each column of elements in the DFT matrix, and form a sixth imaginary part matrix by column by using imaginary part data included in each column of elements in the DFT matrix.

For processing of steps E1 and E2, refer to processing of step B2. Details are not described herein again.

Step E3: Multiply real part data of a rotation factor corresponding to an $s^{th}$ row in the fifth real part matrix by an $s^{th}$ column in the sixth real part matrix to obtain a seventh real part matrix. $s \in [1, N]$, and N is a quantity of columns in the DFT matrix.

Step E4: Multiply imaginary part data of a rotation factor corresponding to an $s^{th}$ row in the fifth imaginary part matrix by an $s^{th}$ column in the sixth imaginary part matrix to obtain a seventh imaginary part matrix.

Step E3 and step E4 are the rotation factor calculation, and a specific calculation process may be implemented based on the vector operation unit. Details are not described in this application. The seventh real part matrix and the seventh imaginary part matrix are DFT matrices obtained by performing the rotation factor calculation.

Because the structure of the butterfly network changes, a rotation factor corresponding to each piece of input data in each calculation stage changes. For each calculation stage, an updated rotation factor corresponding to the input data may be calculated according to the following formula:

$$W_{i,j,k} = W_{N/N_{s\_i}}^{\frac{j-j\%N_{s\_i}}{N_{s\_i}}*k} \text{ , and } W_n^m = e^{\frac{-j2\pi m}{n}}.$$

$N$ is a length of the input data on which the FFT calculation is performed, and $N_{s\_i}$ is a quantity of butterfly units included in each section in the calculation stage. $i$ indicates a sequence of the calculation stage in the FFT calculation. $j$ indicates a position of a butterfly unit in which the input data is located in a corresponding section, and $k$ indicates a position of the input data in a corresponding butterfly unit.

In addition, the updated rotation factor may be pre-calculated and stored in the memory of the computing device. When the rotation factor calculation needs to be performed, the processor may directly obtain the updated rotation factor from the memory, thereby improving calculation efficiency of the rotation factor.

Step E5: Implement the complex matrix multiplication calculation based on the fifth real part matrix, the fifth imaginary part matrix, the seventh real part matrix, the seventh imaginary part matrix, and the matrix operation unit.

A processing process of step E5 is an implementation process of the DFT calculation. For a specific processing process of step E5, refer to the step of implementing the DFT calculation based on the matrix operation unit shown in step 503. Details are not described herein again.

This embodiment of this application further provides a method for performing the DFT calculation by the matrix operation unit. In the method, the DFT calculation corresponding to FIG. 6 may be combined with symmetry of the DFT matrix, to reduce a size of the matrix on which the DFT calculation is performed. This improves efficiency of performing the DFT calculation by the matrix operation unit. The processing of step E5 may include the following steps.

Step G1: Form a ninth real part matrix by using first M columns in the seventh real part matrix, and form a ninth imaginary part matrix by using first M columns in the seventh imaginary part matrix, where when N is an even number, M=N/2+1, or when N is an odd number, M=(N+1)/2.

The seventh real part matrix is a matrix formed by corresponding real part data obtained by performing the multiplication operation on the DFT matrix and the rotation factor, and the seventh imaginary part matrix is a matrix formed by corresponding imaginary part data obtained by performing the multiplication operation on the DFT matrix and the rotation factor.

Step G2: Add an $r^{th}$ row in the fifth real part matrix to an $s^{th}$ row, and delete real part data of the $r^{th}$ row to obtain an eighth real part matrix; and subtract an $r^{th}$ row from an $s^{th}$ row in the fifth imaginary part matrix, and delete imaginary part data of the $r^{th}$ row to obtain an eighth imaginary part matrix. $s \in [2, N/2]$, or when N is an odd number, $s \in [2, (N+1)/2]$.

Because the first M columns in the seventh real part matrix or the seventh imaginary part matrix have been multiplied by rotation factors corresponding to first M rows of input data, the first M rows of input data include input data of the $s^{th}$ row. In this way, when the DFT calculation is performed based on the symmetry of the DFT matrix, input data of the $r^{th}$ row in the matrix formed by the input data is calculated together with a rotation factor corresponding to the $s^{th}$ row by combining with the input data of the $s^{th}$ row. Therefore, before the fifth real part matrix and the fifth imaginary part matrix are formed, rotation factor compensation may be first performed on the input data of the $r^{th}$ row, so that after compensated input data of the $r^{th}$ row and the rotation factor corresponding to the $s^{th}$ row are calculated, effect of calculating the input data of the $r^{th}$ row and the rotation factor of the $r^{th}$ row may be implemented.

For example, the complex multiplication calculation may be performed on the input data of the $r^{th}$ row and a compensation rotation factor to obtain updated input data of the $r^{th}$ row, where the compensation rotation factor is calculated by using rotation factors respectively corresponding to the input data of the $r^{th}$ row and the input data of the $s^{th}$ row in the input data of each butterfly unit. Specific calculation may be as follows.

For example, the rotation factor corresponding to the input data of the $s^{th}$ row is: $T'_{i,a} = [W_{i,0,a} W_{i,1,a} ... W_{i,t-1,a}]$. The rotation factor corresponding to the input data of the $r^{th}$ row is: $T'_{i,b} = [W_{i,0,b} W_{i,1,b} ... W_{i,t-1,b}]$. Because $T'_{i,a}$ is used as a common rotation factor of the input data of the $s^{th}$ row and the input data of the $r^{th}$ row, and is multiplied to the DFT matrix, rotation factor compensation needs to be performed on the input data of the $r^{th}$ row, to eliminate impact of the rotation factor corresponding to the input data of the $s^{th}$ row on the input data of the $r^{th}$ row. Before the DFT calculation is performed, imaginary part of each element of $T'_{i,a}$ may be negated to obtain a negation result. Then, a new rotation factor (that is, the compensation rotation factor) $T''_{i,b}$ is obtained by dividing the negation result by $T'_{i,b}$ ($T''_{i,b}$ may be actually calculated by directly multiplying $T'_{i,b}$ element by element and $T'_{i,a}$).

Step G3: Input the eighth real part matrix, the eighth imaginary part matrix, the ninth real part matrix, and the ninth imaginary part matrix to the matrix operation unit, so that the matrix operation unit performs the complex matrix multiplication calculation to obtain a result matrix, where first M columns of data in the result matrix are respectively output data of M butterfly units in the target calculation stage.

For a specific implementation process of step G3, refer to the step of implementing the DFT calculation based on the matrix operation unit shown in step 503. Details are not described herein again.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the method for performing FFT provided in embodiments of this application.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the method for performing FFT provided in embodiments of this application.

In this application, terms such as "first" and "second" are used to distinguish same items or similar items that have basically same functions. It should be understood that there is no logical or time sequence dependency between "first" and "second", and a quantity and an execution sequence are not limited. It should also be understood that although the following descriptions use terms such as "first" and "second" to describe various elements, these elements should not be limited by the terms. These terms are simply used to distinguish one element from another. For example, without departing from the scope of the various examples, a first real part matrix may be referred to as a second real part matrix, and similarly, a second real part matrix may be referred to as a first real part matrix. Both the first real part matrix and the second real part matrix may be collectively referred to as real part matrices, and in some cases, may be separate and different real part matrices.

In this application, a term "at least one" means one or more, and a term "a plurality of" in this application means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. A method for performing FFT, wherein the method is performed by a processor, the processor comprises a vector operation unit and a matrix operation unit, and the method comprises:

   responding to an execution request of fast Fourier transform FFT calculation of an application;
   decomposing the FFT calculation into a plurality of calculation stages, wherein the plurality of calculation stages comprise at least one target calculation stage, and the target calculation stage comprises rotation factor calculation and discrete Fourier transform DFT calculation obtained by splitting the FFT calculation;
   sequentially executing the plurality of calculation stages, wherein when the target calculation stage is executed, the vector operation unit performs the rotation factor calculation, and the matrix operation unit performs the DFT calculation; and
   after the execution of the plurality of calculation stages is completed, determining an execution result of the FFT calculation based on an execution result of a last calculation stage, and returning the execution result to the application.

2. The method according to claim 1, wherein the rotation factor calculation comprises complex vector multiplication calculation on input data in the target calculation stage and a corresponding rotation factor, and that the vector operation unit performs the rotation factor calculation comprises:
   performing, by the vector operation unit, complex multiplication calculation on the input data in the target calculation stage and the corresponding rotation factor, to obtain a calculation result, wherein the calculation result comprises input data of each butterfly unit in the target calculation stage.

3. The method according to claim 2, wherein the DFT calculation comprises complex matrix multiplication calculation on a DFT matrix and the input data of each butterfly unit in the target calculation stage, and that the matrix operation unit performs the DFT calculation comprises:

   obtaining real part data and imaginary part data in the input data of each butterfly unit;
   obtaining real part data and imaginary part data of each column of elements in the DFT matrix; and
   implementing the complex matrix multiplication calculation based on the real part data and the imaginary part data that correspond to each butterfly unit, the real part data and the imaginary part data that correspond to the DFT matrix, and the matrix operation unit.

4. The method according to claim 3, wherein the implementing the complex matrix multiplication calculation based on the real part data and the imaginary part data that correspond to each butterfly unit, the real part data and the imaginary part data that correspond to the DFT matrix, and the matrix operation unit comprises:

forming a first real part matrix by row by using the real part data in the input data of each butterfly unit;
forming a first imaginary part matrix by row by using the imaginary part data in the input data of each butterfly unit;
forming a second real part matrix by column by using the real part data comprised in each column of elements in the DFT matrix;
forming a second imaginary part matrix by column by using the imaginary part data comprised in each column of elements in the DFT matrix; and
implementing the complex matrix multiplication calculation based on the first real part matrix, the first imaginary part matrix, the second real part matrix, the second imaginary part matrix, and the matrix operation unit.

5. The method according to claim 4, wherein a quantity of columns in the DFT matrix is N, and the implementing the complex matrix multiplication calculation based on the first real part matrix, the first imaginary part matrix, the second real part matrix, the second imaginary part matrix, and the matrix operation unit comprises:

adding a $y^{th}$ row in the first real part matrix to an $x^{th}$ row, and deleting real part data of the $y^{th}$ row to obtain a third real part matrix, wherein y=N+2-x, or when N is an even number, $x \in [2, N/2]$, or when N is an odd number, $x \in [2, (N+1)/2]$;
subtracting a $y^{th}$ row from an $x^{th}$ row in the first imaginary part matrix, and deleting imaginary part data of the $y^{th}$ row to obtain a third imaginary part matrix;
forming a fourth real part matrix by using first M columns in the second real part matrix, wherein when N is an even number, M=N/2+1, or when N is an odd number, M=(N+1)/2;
forming a fourth imaginary part matrix by using first M columns in the second imaginary part matrix; and
inputting the third real part matrix, the third imaginary part matrix, the fourth real part matrix, and the fourth imaginary part matrix to the matrix operation unit, so that the matrix operation unit performs the complex matrix multiplication calculation.

6. The method according to claim 1, wherein a calculation result of each calculation stage in the FFT calculation is formed by output data of a butterfly unit comprised in the calculation stage, and the method further comprises:

for each calculation stage, reading input data in the calculation stage in batches based on a specified read stride before the calculation is performed, and separately storing the input data read each time in a specified quantity of vector registers, wherein the specified quantity is the same as a value of the specified read stride, the specified read stride is equal to a ratio of a length of the input data on which the FFT calculation is performed to a specified value, and the specified value is equal to a product of radixes respectively corresponding to the calculation stage and another calculation stage in which the calculation is performed; and
for each calculation stage, sequentially obtaining output data of each butterfly unit after the calculation is completed, storing obtained output data of a $1^{st}$ butterfly unit in a memory based on a specified storage interval, and storing obtained output data of another butterfly unit after the $1^{st}$ butterfly unit in a position, in the memory, after a position in which output data of a butterfly unit is stored last time, wherein the specified storage interval is equal to a ratio of the length of the input data on which the FFT calculation is performed to a radix of the calculation stage.

7. The method according to claim 6, wherein the rotation factor calculation comprises complex vector multiplication calculation on a DFT matrix and a rotation factor corresponding to input data in the target calculation stage, and the DFT calculation comprises complex matrix multiplication calculation on the input data in the target calculation stage and the DFT matrix.

8. The method according to claim 7, wherein the vector operation unit performs the rotation factor calculation comprises:

forming a fifth real part matrix by row by using real part data in input data of each butterfly unit, and forming a fifth imaginary part matrix by row by using imaginary part data in the input data of each butterfly unit;
forming a sixth real part matrix by column by using real part data comprised in each column of elements in the DFT matrix, and forming a sixth imaginary part matrix by column by using imaginary part data comprised in each column of elements in the DFT matrix; and
multiplying, by the vector operation unit, real part data of a rotation factor corresponding to an $s^{th}$ row in the fifth real part matrix by an $s^{th}$ column in the sixth real part matrix to obtain a seventh real part matrix, and multiplying imaginary part data of a rotation factor corresponding to an $s^{th}$ row in the fifth imaginary part matrix by an $s^{th}$ column in the sixth imaginary part matrix to obtain a seventh imaginary part matrix, wherein $s \in [1, N]$, and N is a quantity of columns in the DFT matrix; and

that the matrix operation unit performs the DFT calculation comprises:

implementing the complex matrix multiplication calculation based on the fifth real part matrix, the fifth imaginary part matrix, the seventh real part matrix, the seventh imaginary part matrix, and the matrix operation unit.

9. The method according to claim 8, wherein when N is an even number, $s \in [2, N/2]$, or when N is an odd number, $s \in [2, (N+1)/2]$; and before the forming a fifth real part matrix by row by using real part data in input data of each butterfly unit, the method comprises:

performing complex multiplication calculation on input data of an $r^{th}$ row in the input data of each butterfly unit and a compensation rotation factor to obtain updated input data of the $r^{th}$ row, wherein the compensation rotation factor is calculated by using rotation factors respectively corresponding to the input data of the $r^{th}$ row and input data of the $s^{th}$ row in the input data of each butterfly unit, and r=N+2-s; and

the implementing the complex matrix multiplication calculation based on the fifth real part matrix, the fifth imaginary part matrix, the seventh real part matrix, the seventh imaginary part matrix, and the matrix operation unit comprises:

adding an $r^{th}$ row in the fifth real part matrix to an $s^{th}$ row, and deleting real part data of the $r^{th}$ row to obtain an eighth real part matrix; and subtracting an $r^{th}$ row from an $s^{th}$ row in the fifth imaginary part matrix, and deleting imaginary part data of the $r^{th}$ row to obtain an eighth imaginary part matrix;

forming a ninth real part matrix by using first M columns in the seventh real part matrix, and forming a ninth imaginary part matrix by using first M columns in the seventh imaginary part matrix, wherein when N is an even number, M=N/2+1, or when N is an odd number, M=(N+1)/2; and

inputting the eighth real part matrix, the eighth imaginary part matrix, the ninth real part matrix, and the ninth imaginary part matrix to the matrix operation unit, so that the matrix operation unit performs the complex matrix multiplication calculation to obtain a result matrix, wherein first M columns of data in the result matrix are respectively output data of M butterfly units in the target calculation stage.

10. A processor, wherein the processor comprises a vector operation unit and a matrix operation unit, and the processor is configured to perform the method for performing FFT according to any one of claims 1 to 9.

11. A computing device, wherein the computing device comprises a memory and the processor according to claim 10, the memory stores at least one instruction, and the processor is configured to perform the at least one instruction, to implement the method for performing FFT according to any one of claims 1 to 9.

12. A computer-readable storage medium, wherein the computer-readable storage medium stores computer program code, and when the computer program code is executed by a computer device, the computer device is enabled to perform the method for performing FFT according to any one of claims 1 to 9.

13. A computer program product comprising instructions, wherein when the computer program product runs on a computer device, the computer device is enabled to perform the method for performing FFT according to any one of claims 1 to 9.

FIG. 1

Radix-2 butterfly unit     Radix-3 butterfly unit

FIG. 2

| Processor 304 | | Communication interface 308 |

Bus 302

Memory 306

Computing device 300

FIG. 3

Vector operation unit

Matrix operation unit

Processor

FIG. 4

A processor responds to an execution request of fast Fourier transform FFT calculation of an application — 501

Decompose the FFT calculation into a plurality of calculation stages, where the plurality of calculation stages include at least one target calculation stage, and the target calculation stage includes rotation factor calculation and discrete Fourier transform DFT calculation obtained by splitting the FFT calculation — 502

Sequentially execute the plurality of calculation stages, where when the target calculation stage is executed, a vector operation unit performs the rotation factor calculation, and a matrix operation unit performs the DFT calculation — 503

After the execution of the plurality of calculation stages is completed, determine an execution result of the FFT calculation based on an execution result of a last calculation stage, and return the execution result to the application — 504

FIG. 5

stage 1
radix=3
in_stride=6
out_stride=6
section_num=6
butterfly_num=1

stage 2
radix=3
in_stride=2
out_stride=6
section_num=2
butterfly_num=3

stage 3
radix=2
in_stride=1
out_stride=9
section_num=1
butterfly_num=9

FIG. 6

## INTERNATIONAL SEARCH REPORT

| International application No. |
|---|
| **PCT/CN2024/088668** |

**A. CLASSIFICATION OF SUBJECT MATTER**

G06F 9/30(2018.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 快速, 傅里叶, 傅立叶, 变换, 向量, 矢量, 矩阵, 旋转因子, 离散, 阶段, 复数, 乘法, 蝶形, fast, fourier, transform, FFT, vector, matrix, twiddle factor, discrete, DFT, stage, plurality, multiply, multiplication, butterfly

**C. DOCUMENTS CONSIDERED TO BE RELEVANT**

| Category* | Citation of document, with indication, where appropriate, of the relevant passages | Relevant to claim No. |
|---|---|---|
| X | CN 115859003 A (HUAWEI TECHNOLOGIES CO., LTD.) 28 March 2023 (2023-03-28) description, paragraphs [0052]-[0293], and figures 1-10 | 1-13 |
| A | CN 115878949 A (HUAWEI TECHNOLOGIES CO., LTD.) 31 March 2023 (2023-03-31) entire document | 1-13 |
| A | US 2020142670 A1 (JABER, Marwan A. et al.) 07 May 2020 (2020-05-07) entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 June 2024** | **05 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/088668** |

| Patent document cited in search report | | | Publication date (day/month/year) | Patent family member(s) | | | Publication date (day/month/year) |
| --- | --- | --- | --- | --- | --- | --- | --- |
| CN | 115859003 | A | 28 March 2023 | WO | 2023045516 | A1 | 30 March 2023 |
| CN | 115878949 | A | 31 March 2023 | None | | | |
| US | 2020142670 | A1 | 07 May 2020 | WO | 2019232091 | A1 | 05 December 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310667453

- CN 202311113216